# EUROPEAN PATENT SPECIFICATION

(11) **EP 1 281 269 B1**
(45) Date of publication and mention of the grant of the patent: **04.05.2005**
(21) Application number: 01925726.0
(22) Date of filing: 08.05.2001
(51) Int. Cl.: H04M 15/00, H04L 12/14, H04Q 7/00

(54) **METHOD OF CHARGING FOR RESOURCE USAGE IN A GPRS NETWORK**
VERFAHREN ZUR VERGEBÜHRUNG DER BENUTZUNG VON BETRIEBSMITTELN IN EINEM GPRS-NETZWERK
METHODE DE FACTURATION POUR UTILISATION DES RESSOURCES DANS UN RESEAU GPRS

(30) Priority: 10.05.2000 GB 0011225
(43) Date of publication of application: 05.02.2003
(73) Proprietor: Hewlett-Packard Company, Palo Alto, CA 94304 (US)
(72) Inventor: I'ANSON, Colin, Frenchay Bristol BS16 1JL (GB)
(74) Representative: Squibbs, Robert Francis
(86) International application number: PCT/GB2001/001968
(87) International publication number: WO 2001/086851

(56) References cited:
- WO-A-00/79741
- WO-A-97/26739
- PIROT J: "IMPLEMENTATION OF VALUE8ADDED SERVICES IN AN INTERNET ENVIRONMENT VALUE-ADDED NETWORK SERVICES ARE ESSENTIAL IN THE ACCESS INFRASTRUCTURE IF THE INTERNET IS TO FULLY EXPLOIT ITS STRONG COMMERCIAL POTENTIAL" ELECTRICAL COMMUNICATION, ALCATEL. BRUSSELS, BE, 1 October 1997 (1997-10-01), pages 268-273, XP000751418 ISSN: 0013-4252

## Description

### Field of the Invention

The present invention relates to charging for the use of communications-infrastructure resources including resources associated with value-added services (VAS).

### Background of the Invention

Communication infrastructures suitable for mobile users (in particular, though not exclusively, cellular radio infrastructures) have now become widely adopted. Whilst the primary driver has been mobile telephony, the desire to implement mobile data-based services over these infrastructures, has led to the rapid development of data-capable bearer services across such infrastructures. This has opened up the possibility of many Internet-based services being available to mobile users.

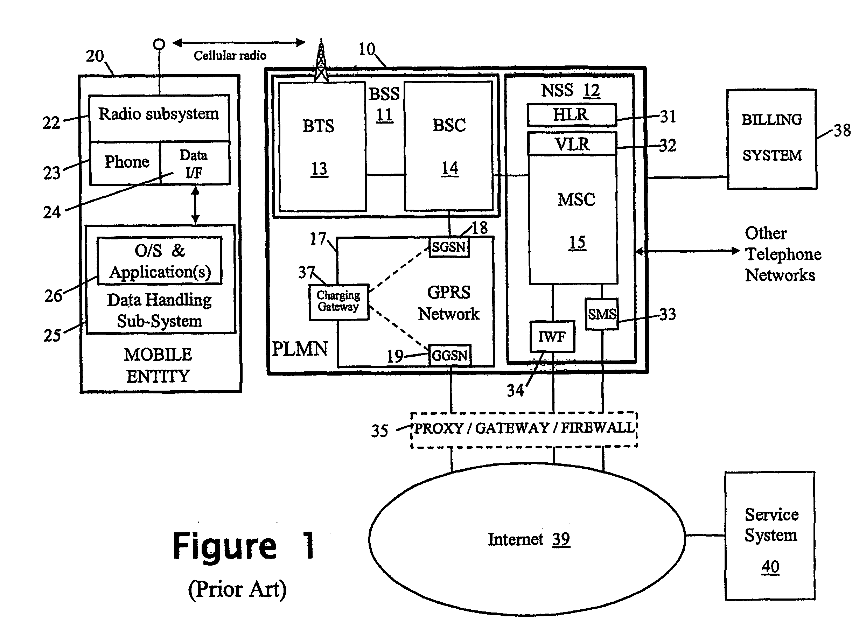

By way of example, Figure 1 shows one form of known communication infrastructure for mobile users providing both telephony and data-bearer services. In this example, a mobile entity 20, provided with a radio subsystem 22 and a phone subsystem 23, communicates with the fixed infrastructure ofGSM PLMN (Public Land Mobile Network) 10 to provide basic voice telephony services. In addition, the mobile entity 20 includes a data-handling subsystem 25 interworking, via data interface 24, with the radio subsystem 22 for the transmission and reception of data over a data-capable bearer service provided by the PLMN; the data-capable bearer service enables the mobile entity 20 to communicate with a service system 40 connected to the public Internet 39. The data handling subsystem 25 supports an operating environment 26 in which applications run, the operating environment including an appropriate communications stack.

More particularly, the fixed infrastructure 10 of the GSM PLMN comprises one or more Base Station Subsystems (BSS) 11 and a Network and Switching Subsystem NSS 12. Each BSS 11 comprises a Base Station Controller (BSC) 14 controlling multiple Base Transceiver Stations (BTS) 13 each associated with a respective "cell" of the radio network. When active, the radio subsystem 22 of the mobile entity 20 communicates via a radio link with the BTS 13 of the cell in which the mobile entity is currently located. As regards the NSS 12, this comprises one or more Mobile Switching Centers (MSC) 15 together with other elements such as Visitor Location Registers 32 and Home Location Register 32.

When the mobile entity 20 is used to make a normal telephone call, a traffic circuit for carrying digitised voice is set up through the relevant BSS 11 to the NSS 12 which is then responsible for routing the call to the target phone (whether in the same PLMN or in another network).

With respect to data transmission to/from the mobile entity 20, in the present example three different data-capable bearer services are depicted though other possibilities exist. A first data-capable bearer service is available in the form of a Circuit Switched Data (CSD) service; in this case a full traffic circuit is used for carrying data and the MSC 32 routes the circuit to an Inter Working Function IWF 34 the precise nature ofwhich depends on what is connected to the other side of the IWF. Thus, IWF could be configured to provide direct access to the public Internet 39 (that is, provide functionality similar to an IAP - Internet Access Provider IAP). Alternatively, the IWF could simply be a modem connecting to a PSTN; in this case, Internet access can be achieved by connection across the PSTN to a standard IAP.

A second, low bandwidth, data-capable bearer service is available through use of the Short Message Service that passes data carried in signalling channel slots to an SMS unit which can be arranged to provide connectivity to the public Internet 39.

A third data-capable bearer service is provided in the form ofGPRS (General Packet Radio Service which enables IP (or X.25) packet data to be passed from the data handling system of the mobile entity 20, via the data interface 24, radio subsystem 21 and relevant BSS 11, to a GPRS network 17 of the PLMN 10 (and vice versa). The GPRS network 17 includes a SGSN (Serving GPRS Support Node) 18 interfacing BSC 14 with the network 17, and a GGSN (Gateway GPRS Support Node) interfacing the network 17 with an external network (in this example, the public Internet 39). Full details of GPRS can be found in the ETSI (European Telecommunications Standards Institute) GSM 03.60 specification. Using GPRS, the mobile entity 20 can exchange packet data via the BSS 11 and GPRS network 17 with entities connected to the public Internet 39.

The data connection between the PLMN 10 and the Internet 39 will generally be through a firewall 35 with proxy and/or gateway functionality.

Different data-capable bearer services to those described above may be provided, the described services being simply examples of what is possible.

In Figure 1, a service system 40 is shown connected to the Internet 40, this service system being accessible to the OS/application 26 running in the mobile entity by use of any of the data-capable bearer services described above. The data-capable bearer services could equally provide access to a service system that is within the domain of the PLMN operator or is connected to another public or private data network.

With regard to the OS/application software 26 running in the data handling subsystem 25 of the mobile entity 20, this could, for example, be a WAP application running on top of a WAP stack where "WAP" is the Wireless Application Protocol standard. Details of WAP can be found, for example, in the book "Official Wireless Application Protocol" Wireless Application Protocol Forum, Ltd published 1999 Wiley Computer Publishing. Where the OS/application software is WAP compliant, the firewall will generally also serve as a WAP proxy and gateway. Of course, OS/application 26 can comprise other functionality (for example, an e-mail client) instead of, or additional to, the WAP functionality.

The mobile entity 20 may take many different forms. For example, it could be two separate units such as a mobile phone (providing elements 22-24) and a mobile PC (data-handling system 25) coupled by an appropriate link (wireline, infrared or even short range radio system such as Bluetooth). Alternatively, mobile entity 20 could be a single unit such as a mobile phone with WAP functionality. Of course, if only data transmission/reception is required (and not voice), the phone functionality 24 can be omitted; an example of this is a PDA with built-in GSM data-capable functionality whilst another example is a digital camera (the data-handling subsystem) also with built-in GSM data-capable functionality enabling the upload of digital images from the camera to a storage server.

Whilst the above description has been given with reference to a PLMN based on GSM technology, it will be appreciated that many other cellular radio technologies exist and can typically provide the same type of functionality as described for the GSM PLMN 10.

With respect to the billing of users for use of PLMN resources, network resource usage is tracked at key points (for example, the MSC) which generate billing records for billable events, these records being passed back to a central billing system 38. The amount a useris charged for using a resource will depend not only on how long a particular resource (e.g. voice traffic circuit) has been used, but also on factors such as time of day and quality of service.

More particularly, billing in relation to the GPRS network is effected by having the service nodes 18,19 generate packet counts in respect of a user's use of the network, these packet counts then being passed to a charging gateway 37 that generates Call Detail Records for sending to the billing system 38. Such a billing approach is disclosed in WO 97/26739-A.

It is also known to bill for usage of a WAP gateway.

It is an object of the present invention to facilitate the billing of value added services.

### Summary of the Invention

According to the present invention, there is provided a method of charging for resource usage in a communications infrastructure, wherein user packet-data traffic is divided into a first traffic flow associated with value-added service, VAS, resources provided by the communications infrastructure, and a second traffic flow for other traffic; the first traffic flow being routed through a VAS marshalling system where the respective traffic components for the individual VAS resources are identified and metered.

According to a further aspect of the present invention, there is provided a packet-data communications infrastructure including:
- a switch for dividing user packet-data traffic into a first traffic flow associated with value-added service, VAS, resources provided or accessible by the communications infrastructure, and a second traffic flow for other traffic; and
- a VAS marshalling system through which the first traffic flow is routed by the switch, the marshalling system being operative to identify and meter the respective traffic components for the individual VAS resources.

Particular embodiments of the invention are specified in the dependent claims.

### Brief Description of the Drawings

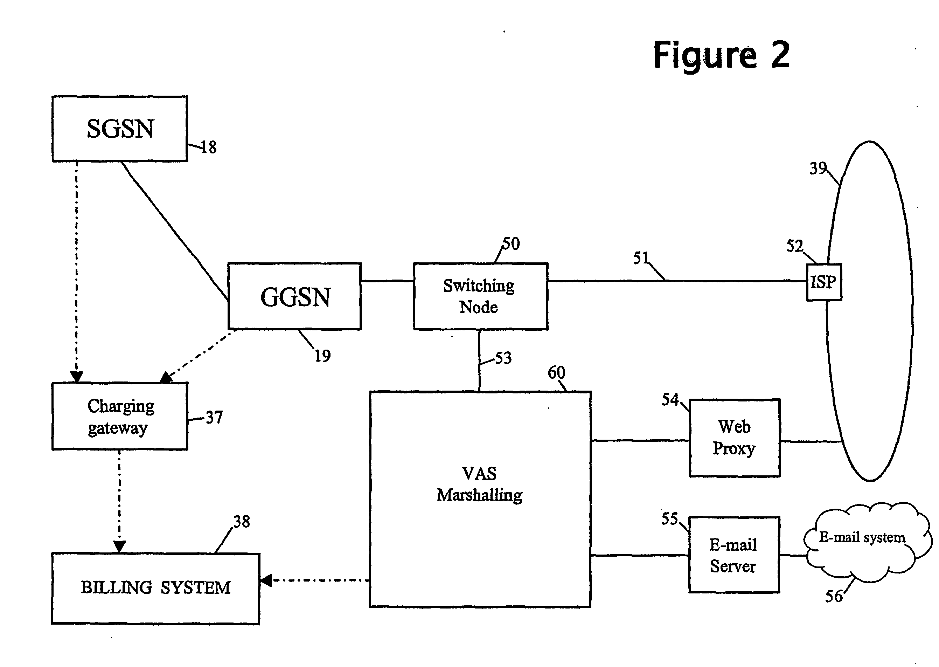

A method and communications infrastructure, both embodying the present invention, for charging for use of VAS-associated resources in a communications infrastructure, will now be described, by way of non-limiting example, with reference to the accompanying diagrammatic drawings, in which:
- **. Figure 1**: is a diagram of a known communications infrastructure usable for transferring voice and data to/from a mobile entity; and
- **. Figure 2**: is a diagram illustrating how users are charged for VAS-associated resources accessed through a GPRS network of the Figure 1 communications infrastructure.

### Best Mode of Carrying Out the Invention

The present invention is described hereinafter in relation to usage of particular resources accessed through GPRS network 17 of the Figure 1 system. For simplicity, no description is given as to how a user pays for use of the PLMN 10 other than GPRS network 17, it being possible to use any appropriate charging mechanism for such use.

With reference to Figure 2, the GPRS network 17 standardly comprises SGSN node 18, GGSN node 19, and charging gateway 37. User packet-data traffic through the GPRS network is metered (packet counted) at nodes 18 and 19 and the counts passed to the charging node; the charging node 37 is responsible for sending Call Data Records to the billing system 38 in respect of these counts of user traffic flows.

In order to provide for more targeted charging in respect of the usage of specific resources, such as web proxy 54, e-mail server 55, and WAP gateway (not shown), the basic user traffic flow is divided by switching node 50 into a standard traffic flow 51 that, for example, is routed to an ISP 52, and a VAS traffic flow 53 that is routed to a VAS marshalling system 60. The division of the user traffic into flows 51 and 53 can simply be done on the basis of whether individual data packets are destined for a VAS resource. Of course, for data packets coming from the VAS resources, the switching node simply routes the packets towards the appropriate mobile user.

In marshalling system 60, the traffic flow components intended for, or coming from, each different VAS resource are identified and metered (using, for example, Smart Internet Usage equipment commercially available from Hewlett-Packard Company). The metering information (including resource identifier) are passed to the billing system 38 to enable the user to be billed for the resource usage.

The above-described VAS billing system can be used not only to bill in respect of VAS resource usage in terms of usage of resources 54, 55 but also in dependence on the final, remote, resource concerned (for example, the identity of a web site being accessed). Additionally, the marshalling system can also include access control equipment providing, for example, payment-dependent access control to particular websites; a suitable system for implementing such control is the Internet Payment System available from Verifone which can be set up to enable credit card payment to be made for website usage.

The VAS billing system can be used to provide discounts and to split billing between the mobile user and the party controlling the other end point of the communication. Thus, a party running a web site can contract with the PLMN operator to pick up part ofthe cost of accesses to their website made by mobile users.

The marshalling system 60 can be implemented either as one (or several) nodes configured as depicted in Figure 2 or as a group of distributed devices each associated with a respective one of the resources 54, 55.

It will be understood that the above-described method and system can be applied to the operation of other communication infrastructures and are not limited to use with GPRS networks.

## Claims

1. A method of charging for resource usage in a communications infrastructure, wherein user packet-data traffic is divided into a first traffic flow associated with value-added service, VAS, resources provided by, or accessible to, the communications infrastructure, and a second traffic flow for other traffic; the first traffic flow being routed through a VAS marshalling system where the respective traffic components for the individual VAS resources are identified and metered.

2. A method according to claim 1, wherein all the user traffic is metered and billed at a prevailing charge rate, additional billing being effected in respect of use of the VAS resources by the first traffic flow as metered by the VAS marshalling system.

3. A method according to claim 1, wherein the VAS marshalling system separates / combines the component traffic flows associated with the various VAS resources.

4. A method according to claim 1, wherein the marshalling system is distributed across metering units associated with respective ones of said VAS resources, the first data flow being formed from / divided into component traffic flows associated with respective ones of said VAS resources, externally of the distributed VAS marshalling system.

5. A method according to claim 1, wherein the billing in respect of a traffic component associated with a given VAS resource is divided between the user and the party responsible for the traffic.

6. A packet-data communications infrastructure including:
- a switch (50) for dividing user packet-data traffic into a first traffic flow associated with value-added service, VAS, resources (54, 55) provided or accessible by the communications infrastructure, and a second traffic flow for other traffic; and
- a VAS marshalling system (60) through which the first traffic flow is routed by the switch, the marshalling system being operative to identify and meter the respective traffic components for the individual VAS resources (54, 55).

7. An infrastructure according to claim 6, further including a standard-billing system (37, 38) for metering and billing all the user traffic at a prevailing charge rate, being adapted to perform additional billing in respect of use of the VAS resources (54, 55) by the first traffic flow as metered by the VAS marshalling system (60).

8. An infrastructure according to claim 6, wherein the VAS marshalling system (60) is operative to separate / combine the component traffic flows associated with the various VAS resources (54, 55).

9. An infrastructure according to claim 6, wherein the marshalling system (60) is distributed across metering units associated with respective ones of said VAS resources (54, 55), the infrastructure including a switch arrangement for forming / dividing the first data flow from / into component traffic flows associated with respective ones of said VAS resources, externally of the distributed VAS marshalling system.

10. An infrastructure according to claim 6, wherein the VAS marshalling system (60) includes a subsystem for dividing the billing in respect of a traffic component associated with a given VAS resource, between the user and the party responsible for the traffic.

## Patentansprüche

1. Ein Verfahren zum Laden für Ressourcenverwendung in einer Kommunikationsinfrastruktur, wobei Benutzerpaketdatenverkehr in einen ersten Verkehrsfluss, der Mehrwertdienst-, VAS-, Ressourcen zugeordnet ist, die durch die Kommunikationsinfrastruktur geliefert werden oder für dieselbe zugreifbar sind, und einen zweiten Verkehrsfluss für anderen Verkehr geteilt wird; wobei der erste Verkehrsfluss durch ein VAS-Ordnungssystem geleitet wird, wo die jeweiligen Verkehrskomponenten für die einzelnen VAS-Ressourcen identifiziert und gemessen werden.

2. Ein Verfahren gemäß Anspruch 1, bei dem aller Benutzerverkehr mit einer vorherrschenden Gebührenrate gemessen und abgerechnet wird, wobei zusätzliches Abrechnen bezüglich der Verwendung der VAS-Ressourcen durch den ersten Verkehrsfluss bewirkt wird, wie es durch das VAS-Ordnungssystem gemessen wird.

3. Ein Verfahren gemäß Anspruch 1, bei dem das VAS-Ordnungssystem die Komponentenverkehrsflüsse trennt/kombiniert, die den verschiedenen VAS-Ressourcen zugeordnet sind.

4. Ein Verfahren gemäß Anspruch 1, bei dem das Ordnungssystem über Messeinheiten verteilt ist, die jeweiligen der VAS-Ressourcen zugeordnet sind, wobei der erste Datenfluss gebildet ist aus/unterteilt ist in Komponentenverkehrsflüsse, die jeweiligen der VAS-Ressourcen außerhalb des verteilten VAS-Ordnungssystems zugeordnet sind.

5. Ein Verfahren gemäß Anspruch 1, bei dem das Abrechnen bezüglich einer Verkehrskomponente, die einer bestimmten VAS-Ressource zugeordnet ist, zwischen dem Benutzer und der Partei, die für den Verkehr verantwortlich ist, geteilt ist.

6. Eine Paketdatenkommunikationsinfrastruktur, die folgende Merkmale umfasst:
- einen Schalter (50) zum Teilen von Benutzerpaketdatenverkehr in einen ersten Verkehrsfluss, der Mehrwertdienst-, VAS-, Ressourcen (54, 55) zugeordnet ist, die durch die Kommunikationsinfrastruktur geliefert werden oder für dieselbe zugreifbar sind, und in einen zweiten Verkehrsfluss für anderen Verkehr; und
- ein VAS-Ordnungssystem (60), durch das der erste Verkehrsfluss durch den Schalter geleitet wird, wobei das Ordnungssystem wirksam ist, um die jeweiligen Verkehrskomponenten für die einzelnen VAS-Ressourcen (54, 55) zu identifizieren und zu messen.

7. Eine Infrastruktur gemäß Anspruch 6, die ferner ein Standardabrechnungssystem (37, 38) zum Messen und Abrechnen alles Benutzerverkehrs mit einer vorherrschenden Gebührenrate umfasst, die angepasst ist, um zusätzliches Abrechnen bezüglich der Verwendung der VAS-Ressourcen (54, 55) durch den ersten Verkehrsfluss durchzuführen, wie es durch das VAS-Ordnungssystem (60) gemessen wird.

8. Eine Infrastruktur gemäß Anspruch 6, bei der das VAS-Ordnungssystem (60) wirksam ist, um die Komponentenverkehrsflüsse, die den verschiedenen VAS-Ressourcen (54, 55) zugeordnet sind, zu trennen/zu kombinieren.

9. Eine Infrastruktur gemäß Anspruch 6, bei der das Ordnungssystem (60) über Messeinheiten verteilt ist, die jeweiligen der VAS-Ressourcen (54, 55) zugeordnet sind, wobei die Infrastruktur eine Schaltanordnung zum Bilden/Teilen des ersten Datenflusses von/in Komponentenverkehrsflüsse umfasst, die jeweiligen der VAS-Ressourcen außerhalb des verteilten VAS-Ordnungssystems zugeordnet sind.

10. Eine Infrastruktur gemäß Anspruch 6, bei der das VAS-Ordnungssystem (60) ein Teilsystem zum Teilen der Abrechnung bezüglich einer Verkehrskomponente, die einer bestimmten VAS-Ressource zugeordnet ist, zwischen dem Benutzer und der Partei, die für den Verkehr verantwortlich ist, umfasst.

## Revendications

1. Procédé de facturation pour utilisation des ressources dans une infrastructure de communications, dans lequel le trafic de données de paquets d'utilisateurs est divisé en un premier flux de trafic associé à des ressources de service à valeur ajoutée, SVA, fournies par, ou accessibles à, l'infrastructure de communications, et un second flux de trafic pour un autre trafic ; le premier flux de trafic étant acheminé par l'intermédiaire d'un système de rassemblement SVA où les composants du trafic respectifs pour les ressources SVA sont identifiés et comptés.

2. Procédé selon la revendication 1, dans lequel tout le trafic de l'utilisateur est compté et facturé à un taux de charge en vigueur, une facturation supplémentaire étant effectuée pour ce qui est de l'utilisation des ressources SVA par le premier flux de trafic telle que comptée par le système de rassemblement SVA.

3. Procédé selon la revendication 1, dans lequel le système de rassemblement SVA sépare/combine les flux de trafic de composants associés aux diverses ressources SVA.

4. Procédé selon la revendication 1, dans le lequel le système de rassemblement est réparti à travers des unités de comptage associées aux ressources respectives desdites ressources SVA, le premier flux de données étant formé à partir de/divisé en flux de trafic de composants associés aux ressources respectives desdites ressources SVA, à l'extérieur du système de rassemblement SVA réparti.

5. Procédé selon la revendication 1, dans lequel la facturation pour ce qui est d'un composant du trafic associé à une ressource SVA donnée est divisée entre l'utilisateur et la partie responsable du trafic.

6. Infrastructure de communications de données de paquets comprenant :
- un commutateur (50) pour diviser le trafic de données de paquets d'utilisateurs en un premier flux de trafic associé à des ressources de service à valeur ajoutée, SVA, (54, 55) fournies ou accessibles par l'infrastructure de communications, et un second flux de trafic pour un autre trafic ; et
- un système de rassemblement SVA (60) par l'intermédiaire duquel le premier flux de trafic est acheminé par le commutateur, le système de rassemblement étant opérationnel pour identifier et compter les composants du trafic respectifs pour les ressources SVA individuelles (54, 55).

7. Infrastructure selon la revendication 6, comprenant en outre un système de facturation standard (37, 38) pour compter et facturer tout le trafic de l'utilisateur à un taux de charge en vigueur, étant adaptée pour effectuer une facturation supplémentaire pour ce qui est de l'utilisation des ressources SVA (54, 55) par le premier flux de trafic telle que comptée par le système de rassemblement SVA (60).

8. Infrastructure selon la revendication 6, dans laquelle le système de rassemblement SVA (60) est opérationnel pour séparer/combiner les flux de trafic de composants associés aux diverses ressources SVA (54, 55).

9. Infrastructure selon la revendication 6, dans laquelle le système de rassemblement (60) est réparti à travers des unités de comptage associées aux ressources respectives desdites ressources SVA (54, 55), l'infrastructure comprenant un agencement de commutateur pour former/diviser le premier flux de trafic à partir de/en flux de trafic de composants associés aux ressources respectives desdites ressources SVA, à l'extérieur du système de rassemblement SVA réparti.

10. Infrastructure selon la revendication 6, dans laquelle le système de rassemblement SVA (60) comprend un sous-système pour diviser la facturation pour ce qui est d'un composant du trafic associé à une ressource SVA donnée, entre l'utilisateur et la partie responsable du trafic.
